**Europäisches Patentamt**

**European Patent Office**

**Office européen des brevets**

(11) Numéro de publication: **0 294 278 B1**

# FASCICULE DE BREVET EUROPEEN

(45) Date de publication du fascicule du brevet:
14.11.90

(51) Int. Cl.⁵: **B64C 1/22**

(21) Numéro de dépôt: **88401295.6**

(22) Date de dépôt: **27.05.88**

(54) **Dispositif de chargement autonome de bord pour avion-cargo.**

(30) Priorité: **04.06.87 FR 8707801**

(43) Date de publication de la demande:
**07.12.88 Bulletin 88/49**

(45) Mention de la délivrance du brevet:
**14.11.90 Bulletin 90/46**

(84) Etats contractants désignés:
**DE GB NL**

(56) Documents cités:
**US-A- 3 463 334**
**US-A- 3 552 587**

(73) Titulaire: **AEROSPATIALE Société Nationale Industrielle, 37, Boulevard de Montmorency, F-75781 Paris Cédex 16(FR)**

(72) Inventeur: **Dalbera, Jacques Maurice, 2 Chemin de la Save, F-31770 Colomiers(FR)**

(74) Mandataire: **Barnay, André François, Cabinet Barnay 80 rue Saint-Lazare, F-75009 Paris(FR)**

ACTORUM AG

## Description

La présente invention est relative à un dispositif de chargement autonome de bord pour avion-cargo à porte latérale, comprenant des moyens de levage déplaçables entre l'extérieur et l'intérieur du fuselage de l'avion, des moyens porteurs et de guidage de ces moyens de levage entre l'intérieur et l'extérieur du fuselage, comportant une première partie s'étendant transversalement à l'intérieur du fuselage au niveau de la porte latérale et fixée dans la partie supérieure de ce dernier, et une deuxième partie mobile entre une position déployée dans laquelle elle prolonge la première partie à l'extérieur du fuselage en s'étendant en saillie transversalement à ce dernier à travers la partie supérieure de l'ouverture découverte par la porte latérale et une position repliée dans laquelle cette deuxième partie est escamotée à l'intérieur du fuselage, des moyens d'appui de la deuxième partie des moyens porteurs et de guidage en position déployée, des moyens de manoeuvre des moyens de levage, des moyens pour déplacer les moyens de levage le long des moyens de guidage, et des moyens de déploiement et de repliement de la deuxième partie des moyens porteurs et de guidage.

On connaît d'après le document US-A-3 561 704, un dispositif du type précité. Toutefois, les moyens porteurs sont ménagés par la porte latérale elle-même, les moyens de guidage ne comportant qu'un seul rail dont une partie est directement fixée à l'intérieur de la porte. Un tel dispositif nécessite un aménagement particulier de la porte latérale qui doit avoir elle-même une structure appropriée pour supporter les charges. De plus, cet agencement peut difficilement être associé à une ouverture de grande dimension dans la mesure où dans un tel cas la résistance qui est demandée à la porte nécessiterait en fonction de sa surface importante des structures imposantes qui seraient lourdes et coûteuses.

On connait également des documents US-A-3 463 334 et US-A-3 552 587 des dispositifs de chargement à chariot monté coulissant sur deux rails parallèles fixes du fuselage.

La présente invention a pour but de remédier aux inconvénients précités en fournissant un dispositif de chargement autonome de bord pour avion-cargo à porte latérale qui soit léger, peu encombrant et qui ne nécessite pas de structures importantes aussi bien au niveau du dispositif lui-même que dans l'avion dans lequel il est disposé .

A cet effet, la présente invention a pour objet un dispositif du type précité, caractérisé en ce que la deuxième partie des moyens porteurs et de guidage, comprend deux bras articulés chacun à une de leurs extrémités, à l'intérieur du fuselage au voisinage d'un angle supérieur correspondant de ladite ouverture latérale du fuselage, ces bras s'étendant parallèlement entre eux en position déployée, et en ce que les moyens d'appui comprennent deux contrefiches s'étendant chacune entre un bras respectif et le plancher à l'intérieur du fuselage, les contre-fiches étant articulées à chacune de leurs extrémités pour permettre le repliement et le déploiement des bras.

Suivant d'autres caractéristiques de la présente invention:

Les bras sont articulés autour d'un axe parallèle à l'axe du fuselage.

Chaque bras comprend deux parties articulées entre elles pour venir dans le prolongement l'une de l'autre en position déployée du bras, ces parties étant articulées autour d'un axe parallèle à l'axe du fuselage.

L'extrémité inférieure de chaque contre-fiche est articulée sur un chariot respectif monté coulissant dans un rail correspondant fixé transversalement dans le plancher du fuselage.

Les moyens de déploiement et de repliement de la deuxième partie des moyens porteurs et de guidage, comprennent des moyens d'entraînement en translation des chariots supportant les contre-fiches dans les rails associés.

Les moyens d'entraînement comprennent un moteur disposé dans le plancher entre les deux rails, adapté pour entraîner deux enrouleurs reliés chacun à un chariot correspondant par l'intermédiaire d'un câble. Suivant une variante de l'invention, les bras sont articulés chacun autour d'un axe incliné par rapport à l'axe du fuselage et les moyens de déploiement et de repliement de la deuxième partie des moyens porteurs et de guidage, comprennent deux vérins disposés chacun dans le fuselage entre la paroi supérieure de ce dernier et un bras respectif.

Il est prévu au moins une entretoise entre les bras.

La première partie des moyens porteurs et de guidage, comprend deux premiers rails fixés parallèlement entre eux sur la paroi supérieure du fuselage et la deuxième partie des moyens porteurs et de guidage, comprend deux deuxièmes rails fixés chacun sous un bras correspondant, la position relative des bras par rapport aux premiers rails étant telle qu'en position déployée de ceux-ci, les deuxièmes rails viennent dans le prolongement des premiers.

Au moins un des premiers rails est escamotable dans la direction de l'axe du fuselage.

Les moyens de levage comprennent sur chaque bras, deux palans portés chacun par un chariot respectif monté coulissant dans les rails des moyens de guidage, les chariots portés par un même bras étant solidaires en déplacement l'un de l'autre.

Les moyens de manoeuvre des moyens de levage, comprennent pour chaque bras, un treuil correspondant comportant au moins un tambour auquel sont reliés les palans du bras par l'intermédiaire d'un câble respectif, des moyens de synchronisation étant prévus entre les deux treuils des moyens de manoeuvre.

Il est prévu des moyens d'équilibrage agissant sur les moyens de synchronisation pour modifier l'inclinaison d'une charge portée par les moyens de levage par rapport à l'axe du fuselage.

Les moyens de déplacement des moyens de levage, comprennent pour chaque bras un treuil correspondant comportant un tambour auquel sont reliés, par l'intermédiaire d'un câble, les chariots du bras.

Les moyens de déplacement associés à un même bras, sont commandés par le treuil correspondant des moyens de manoeuvre, des moyens d'accouplement débrayables étant prévus pour isoler le tambour des moyens de déplacement, ce tambour étant associé à des moyens de freinage.

Les treuils des moyens de manoeuvre sont entraînés chacun par un moteur hydraulique correspondant associé à un dispositif de freinage respectif.

Il est clair que dans la définition de l'invention, on entend par "dispositif de chargement", un dispositif susceptible de charger aussi bien que de décharger l'avion-cargo auquel il est associé, par "moyens de levage", des moyens capables de lever et d'abaisser une charge, par "de bord", le fait que le dispositif est incorporé dans l'avion et fait partie intégrante de celui-ci et par "autonome", le fait que le dispositif ne fait pas appel à des moyens extérieurs à l'avion pour remplir sa tâche.

La description qui va suivre, en regard des dessins annexés à titre d'exemples non limitatifs, permettra de bien comprendre comment l'invention peut être mise en pratique.

La figure 1 est une vue schématique en coupe d'un fuselage d'avion-cargo équipé d'un dispositif de chargement en position déployée selon un mode de réalisation de l'invention.

La figure 2 est une vue schématique de dessus de la figure 1.

La figure 3 est une vue analogue à la figure 1, le dispositif de chargement étant escamoté dans le fuselage en position repliée.

La figure 4 est une vue schématique de dessus de la figure 3.

La figure 5 est un schéma illustrant partiellement les moyens de manoeuvre des moyens de levage, les moyens de déplacement de ces derniers et les moyens de commande associés.

La figure 6 est une vue analogue à la figure 1, avec un deuxième mode de réalisation du dispositif de chargement de l'invention.

La figure 7 est une vue schématique de dessus de la figure 6.

La figure 8 est une vue schématique latérale du fuselage de l'avion-cargo de la figure 6 illustrant le dispositif de chargement de face en position déployée.

La figure 9 est une vue analogue à la figure 6, après repliement du dispositif de l'invention.

La figure 10 est une vue schématique prise sur le côté de la figure 9 face à l'ouverture latérale du fuselage, le dispositif de chargement étant en position repliée.

La figure 11 est un schéma illustrant une variante de réalisation des moyens de levage, des moyens de déplacement de ces derniers et des moyens de commande associés.

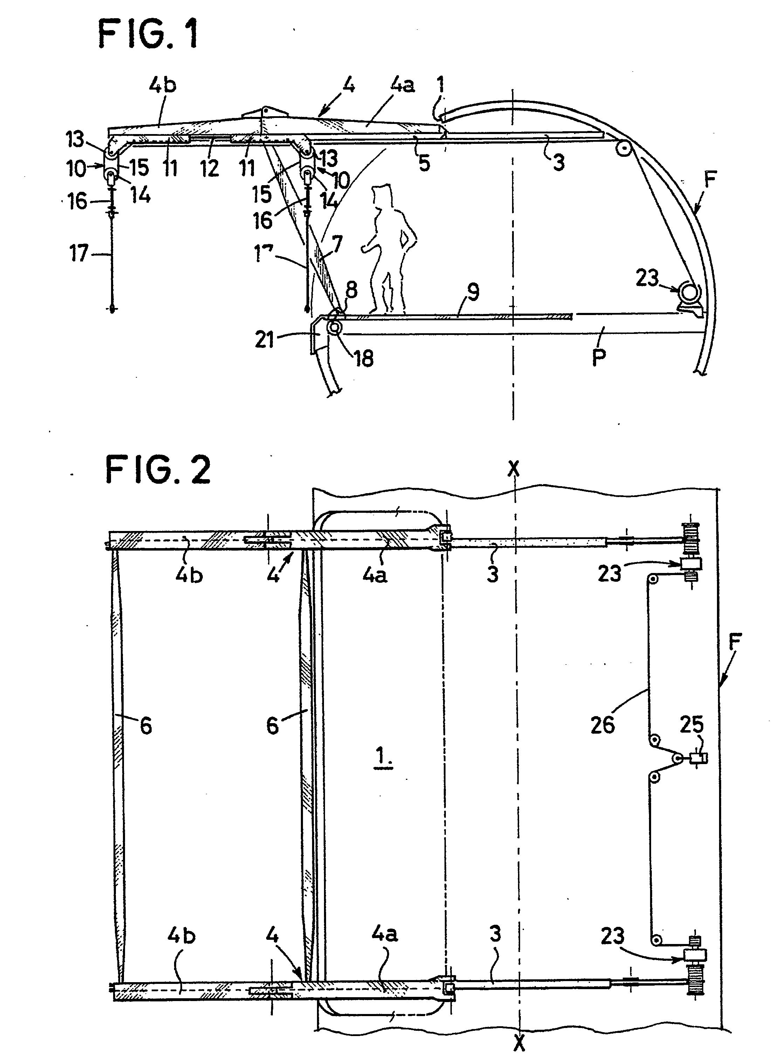

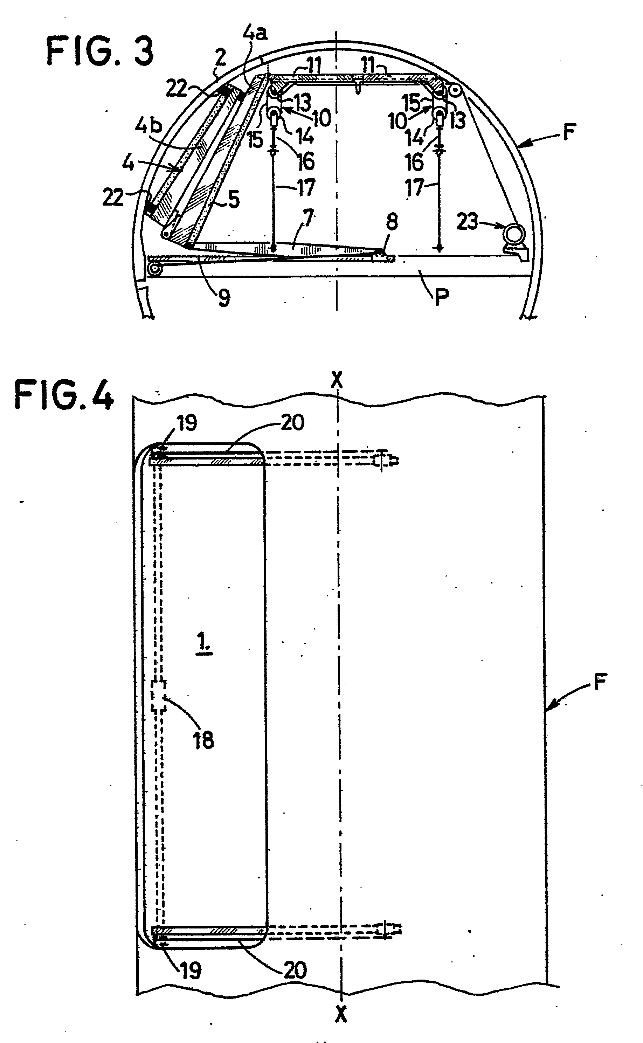

On se référera maintenant aux figures 1 à 4 sur lesquelles on a illustré un premier mode de réalisation du dispositif de chargement de l'invention équipant un avion-cargo comportant un fuselage F d'axe X-X pour embarquer ou débarquer des charges, notamment des véhicules et des matériels roulants, des palettes équipées de moyens de roulement (palettes militaires) ou non (palettes civiles) ou autres par une ouverture 1 latérale ménagée à l'avant du fuselage F adaptée pour être fermée par une porte 2 (figure 3).

Ce dispositif comprend des moyens porteurs et de guidage formés, d'une part, par deux rails 3 fixés sur la paroi supérieure du fuselage à l'intérieur de celui-ci perpendiculairement à l'axe X-X de façon à ce que l'extrémité de chaque rail 3 orientée vers l'ouverture 1 soit située au voisinage d'un angle supérieur correspondant de cette ouverture, les rails 3 étant contenus dans un plan parallèle à l'axe du fuselage F.

Les moyens porteurs et de guidage comprennent d'autre part deux bras 4 articulés chacun au niveau d'une de leurs extrémités à l'intérieur du fuselage au voisinage d'un angle supérieur correspondant de l'ouverture 1 autour d'un même axe parallèle à l'axe X-X. Ces bras 4 sont munis chacun sur leur face inférieure d'un rail 5 respectif analogue aux rails 3 fixés à l'intérieur du fuselage, et ils sont articulés et positionnés de telle façon qu'ils peuvent pivoter entre une position déployée dans laquelle ils s'étendent parallèlement entre eux en saillie à l'extérieur du fuselage de telle façon que chaque rail 5 prolonge un rail 3 voisin correspondant à l'extérieur du fuselage, et une position repliée dans laquelle ils sont escamotés dans le fuselage de l'avion dans le sens de la hauteur de l'ouverture 1.

Pour permettre cet escamotage total dans le fuselage et bénéficier d'une grande longueur en position déployée, les bras 4 sont divisés chacun sur leur longueur en deux parties 4a, 4b articulées entre elles autour d'un axe parallèle à l'axe d'articulation du bras sur le fuselage de sorte que les faces supérieures des parties de bras viennent en regard l'une de l'autre en position repliée de ces parties de bras. Chaque rail 5 est ainsi réalisé également en deux parties s'étendant chacune sur une partie 4a ou 4b du bras correspondant. L'écartement entre les bras 4 est maintenu par l'intermédiaire de deux entretoises 6 s'étendant pour l'une entre les deux parties de bras 4a voisines du fuselage et pour l'autre entre les deux parties de bras 4b d'extrémité libre (figure 2).

Les bras 4 sont associés à des moyens d'appui pour les soutenir en position déployée, ces moyens d'appui comprenant deux contre-fiches 7 articulées chacune à une de ses extrémités autour d'un axe parallèle à l'axe X-X sur un bras 4 respectif et à son autre extrémité également autour d'un axe parallèle à l'axe X-X sur un chariot 8 correspondant monté coulissant dans un rail 9 respectif fixé dans un plancer P prévu dans le fuselage et s'étendant perpendiculairement à l'axe X-X.

Les moyens de levage du dispositif de chargement de l'invention, comprennent quatre palans 10 portés chacun par un chariot 11 respectif. Les chariots 11 sont associés par paire, chaque paire de chariots 11 étant montée de façon à coulisser dans un rail 3 correspondant et dans le rail 5 prolongeant ce dernier en position déployée du bras 4 respectif. Les chariots 11 d'une même paire sont solidaires en déplacement l'un de l'autre grâce à des moyens de liaison 12 éventuellement munis de moyens de réglage (non représentés) des deux chariots 11 ainsi reliés. Les écartements de chariots 11 dans les deux paires sont égaux et ils sont tels que lorsque deux chariots 11 sont en bout des rails 5 sous les bras 4, les palans 10 portés par les deux autres chariots 11 sont contenus dans un plan vertical extérieur au fuselage F et ils peuvent être éventuellement réglés de telle façon que lorsque ces derniers chariots sont en butée aux extrémités correspondantes des rails 3 dans le fuselage, les deux autres chariots soient totalement rentrés dans le fuselage en s'étendant dans les rails 3.

Dans l'exemple représenté, le bras 4 ont une longueur telle que les palans 10 portés par une même paire de chariots 11 ont un écartement maximum de 2,80 m, l'écartement des bras limité par la largeur de l'ouverture 1 étant de 6 m.

Les palans 10 sont de type connu et comportent chacun une poulie 13 fixée au chariot 11 correspondant et une poulie 14 reliée à la poulie 13 par un câble de manoeuvre de levage 15 respectif dont une extrémité est fixée au chariot 11 associé.

Les poulies 14 des palans 10 homologues des deux paires de chariots 11 sont reliées deux à deux par une poutre 16 permettant la fixation des charges par l'intermédiaire de filins 17. Pour permettre la fixation de charges de dimensions différentes, ces poutres comportent chacune une série de trous espacés sur leur longueur pour la fixation des filins 17.

Un moteur 18 incorporé dans le plancher P entre les deux bras 4 adapté pour entraîner deux enrouleurs 19 reliés chacun par l'intermédiaire d'un câble 20 correspondant à un chariot 8, permet de déployer et de replier automatiquement les parties de bras 4a des bras 4. Sur la figure 4, les enrouleurs sont disposés dans le plancher au voisinage des extrémités des rails 9 orientés vers l'ouverture latérale 1.

Pendant les opérations de chargement et de déchargement, un organe de protection et de guidage 21 est disposé le long du bord inférieur de l'ouverture 1 en formant ainsi un seuil (figure 1). Comme cela est représenté sur la figure 3, des butées 22 en matériau élastique sont fixées sur la paroi intérieure de la porte 2 pour maintenir en position repliée du dispositif de chargement et en position repliée de la porte 2, les bras 4 en place en venant en appui contre les parties de bras 4b.

Suivant un agencement avantageux du dispositif de la présente invention, au moins un des rails 3, en l'occurrence le rail arrière par rapport à l'avion si la porte latérale est située à l'avant de celui-ci, est escamotable dans la direction de l'axe X-X pour bénéficier d'une hauteur maximale à l'intérieur du fuselage.

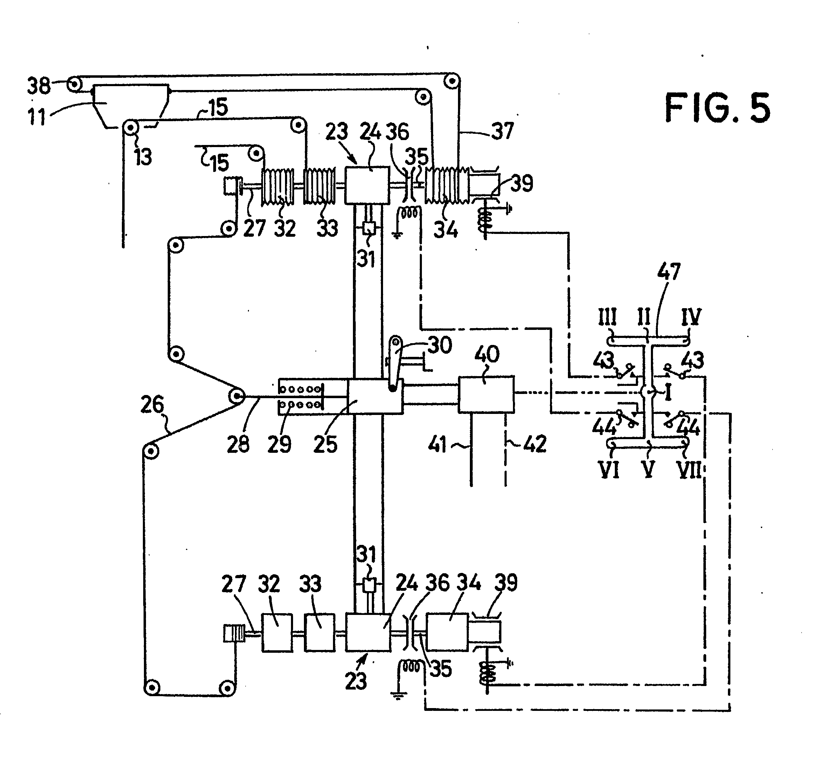

Les moyens de manoeuvre des moyens de levage et les moyens de déplacement de ces derniers le long des moyens de guidage formés par les rails 3 et 5, représentés sur la figure 5, comprennent deux treuils 23 entraînés chacun par un moteur hydraulique 24 correspondant.

Chaque treuil 23 est associé à une paire de chariots 11 et de palans 10 coulissant dans les mêmes rails pour déplacer les premiers dans les rails et pour manoeuvrer ces derniers comme cela va être décrit ci-après.

Les moteurs hydrauliques 24 sont reliés par des moyens de synchronisation connus en soi comprenant un organe de répartition 25 d'un fluide hydraulique entre les deux moteurs et un dispositif de régulation de cet organe de répartition 25 du type à câble 26 reliant les arbres 27 des treuils 23 et à piston de régulation 28 dont le déplacement dans l'organe de répartition est commandé par les variations de la tension du câble 26 à l'encontre de la force exercée par un ressort hélicoïdal 29.

Il est en ouvre prévu un organe d'équilibrage 30 ("trim") connu en soi agissant sur l'organe de répartition 25 pour agir sur la différence de vitesses des moteurs 24 et ainsi modifier l'inclinaison d'une charge portée par les bras 4 par rapport à l'axe du fuselage afin d'amener celle-ci parallèlement au plancher P ou au sol sur lequel repose l'avion-cargo.

Chaque treuil 23 comporte un dispositif de freinage 31 par laminage de fluide destiné à réduire la vitesse du moteur 24 correspondant en fin de course et trois tambours dont deux 32 et 33 sont disposés sur l'arbre principal 27 du treuil et un troisième 34 sur un arbre secondaire 35 adapté pour être accouplé à l'arbre 27 voisin par l'intermédiaire d'un embrayage 36 à commande électrique.

Les deux tambours 32 et 33 coopèrent chacun avec un câble 15 respectif de manoeuvre d'un palan 10 appartenant à une même paire de palans pour lever et abaisser ce palan, et le tambour 34 coopère avec un câble respectif 37, dont un brin tire les chariots 11 associés vers le fuselage et l'autre, qui passe sur une poulie de renvoi 38 en bout du bras 4 correspondant, les tire vers l'extrémité libre de ce bras. Chaque tambour 34 est en outre équipé d'un frein 39 à commande électrique destiné à bloquer le tambour 34 correspondant quand l'embrayage 36 respectif est en position débrayée. En variante lorsque l'écartement entre les palans d'une même paire n'est pas variable, les tambours 32 et 33 peuvent être substitués par un seul tambour.

Les moyens de commande des treuils 23 comprennent un organe 40 d'injection et d'évacuation du fluide hydraulique de commande des moteurs 24 relié à une conduite d'alimentation 41 et à une conduite d'évacuation 42. Les moyens de commande des embrayages 36 et des freins 39 comprennent pour chacun de ceux-ci un interrupteur correspondant 43 pour les freins et 44 pour les embrayages. L'organe 40 et les interrupteurs 43 et 44 sont reliés à un dispositif de sélection schématisé en 47 sur la figure 5 comportant sept positions décrivant un H.

Le dispositif de sélection 47 comporte ainsi une position centrale principale I dans laquelle les moteurs 24 sont à l'arrêt, les freins 39 bloquent les tambours 34 et les embrayages 36 en position embrayée. De chaque côté de cette position I, trois position sont prévues, d'une part les positions II, III et IV dans lesquelles les embrayages 36 sont embrayés et les freins 39 en position inactive, et d'autre par les positions V, VI et VII dans lesquelles les embrayages 36 sont débrayés et les freins 39 appliqués.

Les positions II et V constituent des positions centrales secondaires dans lesquelles les moteurs 24 sont à l'arrêt.

Les positions III, IV, VI et VII correspondent aux positions d'activation des treuils 23 pour les moteurs 24. Dans la position III, les chariots 11 sont déplacés vers l'extérieur du fuselage. Dans la position IV, les chariots 11 sont déplacés vers l'intérieur du fuselage. Dans la position VI, les poulies 14 des palans 10 sont descendues et dans la position VII, elles sont montées.

Pour la mise en oeuvre du dispositif de chargement de l'invention à partir de sa position repliée, on ouvre la porte 2 latérale de l'avion, on déploie les parties de bras 4b et on active le moteur 18 pour faire coulisser les chariots 8 dans les rails 9 de façon à dresser les contre-fiches et à déployer les bras 4 à l'extérieur du fuselage, les rails 5 s'étendant alors dans le prolongement des rails 3. A ce stade, pour débarquer une charge de l'avion, on fixe celle-ci aux élingues 17, on place le sélecteur 47 en position VII pour décoller la charge du plancher P, on passe en position V où la charge est maintenue en position verticale par les freins 31 agissant sur les moteurs 24, puis en position III pour sortir la charge de fuselage. On passe alors en position VI dans laquelle les tambours 34 sont isolés et freinés et dans laquelle les treuils 23 descendent la charge jusqu'au niveau utile.

Pour embarquer une charge, on fixe celle-ci aux élingues 17, on place le sélecteur 47 en position VII pour élever la charge à la hauteur de l'ouverture 1, on passe en position IV pour rentrer la charge dans le fuselage, on passe enfin en position VI pour déposer la charge sur le plancher P. Dans le cas d'une charge ayant une hauteur importante, une fois celle-ci déposée sur le plancher P, on la décroche des poutres 16, on retire la poutre 16 opposée à l'ouverture 1, on passe en position VII pour monter les palans, puis en position III pour les sortir du fuselage et on escamote le rail 3 arrière pour bénéficier d'une hauteur maximum dans le fuselage.

Pour escamoter le dispositif de chargement dans le fuselage, on rentre les palans 10 et on immobilise les poutres soit en les reliant au plancher P ou en laissant une charge accrochée à celles-ci en maintenant les élingues 17 tendues. Les bras 4 sont repliés de façon inverse à ce qui a été précédemment décrit.

Ce dispositif est avantageux dans la mesure où il est léger et efficace car il peut soulever jusqu'à quinze fois sa masse propre. Il ne limite pas en hauteur la dimension de l'ouverture de l'avion et très peu en largeur. En position repliée, il ne présente qu'un faible encombrement, ce qui n'affecte pas le volume disponible pour les charges. Il permet également de se dispenser d'un plateau à billes pour manoeuvrer les charges à l'entrée du fuselage. Ce dispositif particulièrement adapté pour les avions gros porteurs, à ailes basses, notamment militaires, apporte les avantages des avions à rampe et porte arrière, mis à part la limitation conférée pour la longueur des charges.

En variante, un seul treuil 23 peut être prévu à la place des deux ci-dessus et pour les avions ne transportant que des charges relativement légères, on peut prévoir un treuil manuel à manivelle. Des treuils électriques et des dispositifs de synchronisation et d'équilibrage électriques peuvent également être utilisés.

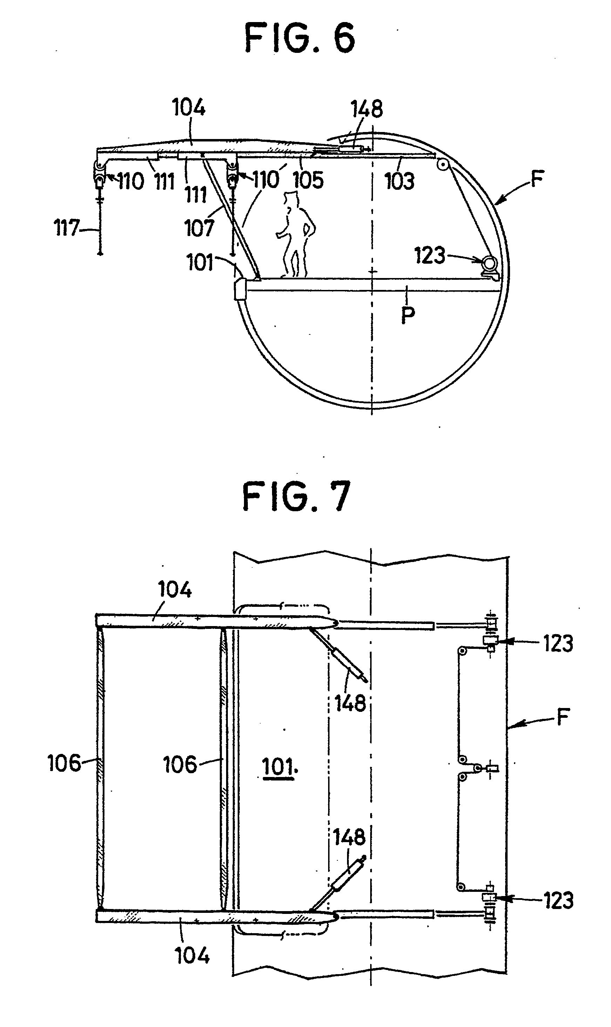

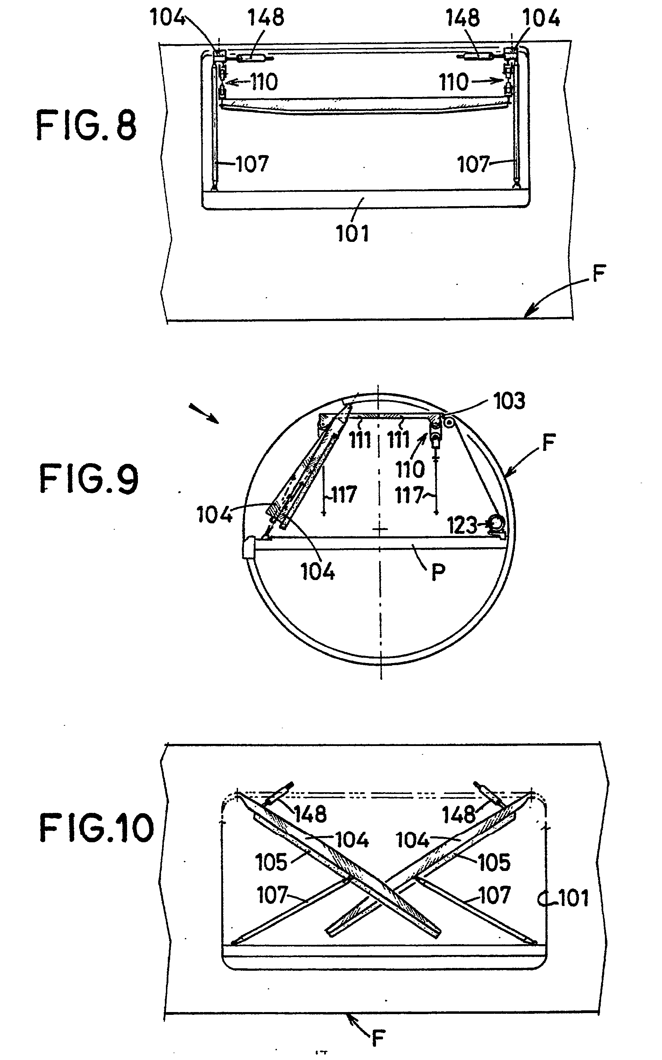

Sur le deuxième mode de réalisation du dispositif de chargement de l'invention représenté sur les figures 6 à 10, on a utilisé pour les parties identiques ou analogues à celles du mode de réalisation précédent, les mêmes références en lettre et les mêmes références numériques augmentées de 100. On limitera ainsi la description aux seules modifications apportées dans ce mode de réalisation par rapport à celui qui vient d'être décrit.

Les bras 104 sont réalisés en une seule partie dans la mesure où ils sont adaptés pour venir s'étendre en position repliée dans le fuselage en diagonale en regard de l'ouverture 101 où ils se croisent. Ainsi, au lieu d'être articulés comme précédemment autour d'un axe parallèle à l'axe du fuselage, ils sont articulés autour d'axes inclinés par rapport audit axe du fuselage. Les contre-fiches 107 sont articulées chacune, d'une part, directement sur le plancher à une extrémité, et d'autre part, sur un bras 104 respectif à l'extrémité opposée.

Les moyens de déploiement et de repliement prévus pour ce mode de réalisation comprennent deux vérins 148 disposés 101 à l'intérieur du fuselage en étant articulés à une extrémité sur un bras 104 correspondant et à l'autre extrémité sur la paroi supérieure du fuselage de façon à déployer le bras à l'extérieur du fuselage par extension et à l'escamoter à l'intérieur de ce dernier par rétraction.

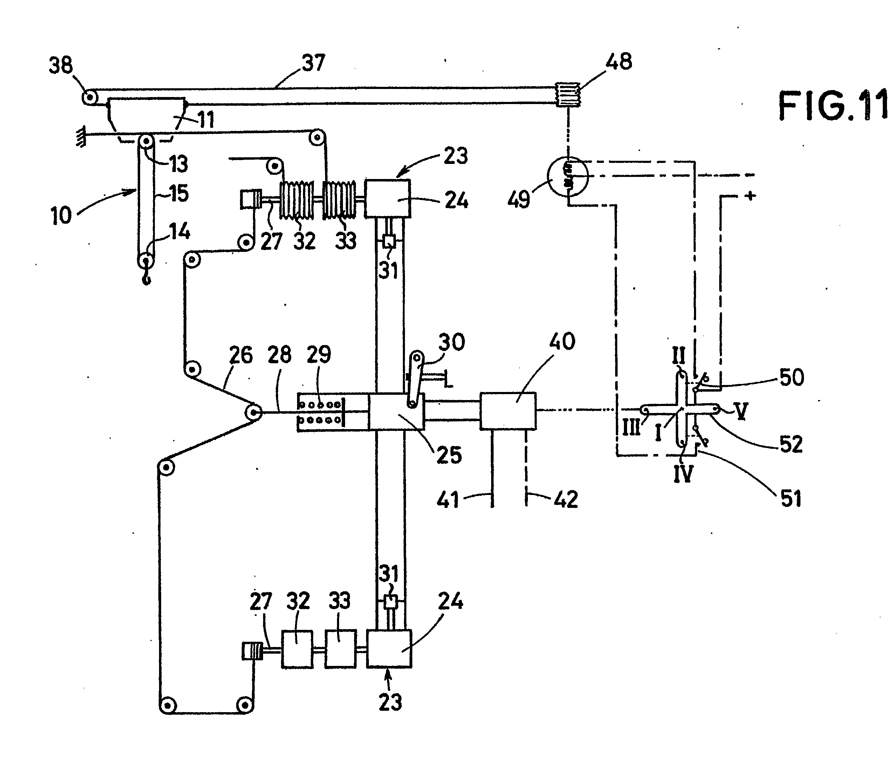

La figure 11 illustre une variante de réalisation des moyens de déplacement des moyens de levage et des moyens de commande du dispositif de chargement qui ont été décrits en référence à la figure 5, les parties analogues ou identiques conservant les mêmes références numériques. La description de cette variante se limitera aux modifications apportées.

Les embrayages 36, les freins 39 et les tambours 34 ont été remplacés par un treuil à moteur électrique 49 relié à deux tambours 48 (un seul étant représenté sur la figure 11). Comme précédemment chaque tambour 48 coopère avec un câble 37 respectif pour déplacer les chariots 11 dans les deux sens le long des moyens de guidage. Les moyens de commande du moteur électrique 49 comprennent un interrupteur 50 commandant sa rotation dans un sens et un interrupteur 51 commandant sa rotation dans le sens inverse.

L'organe de commande 40 des moteurs hydrauliques 24 et les interrupteurs 50 et 51 sont reliés à un dispositif de sélection schématisé en 52 comportant cinq positions décrivant une croix. Ce dispositif 52 comporte ainsi une position centrale I dans laquelle les moteurs 24 et le moteur 10 sont à l'arrêt et quatre positions extrêmes II, III, IV, V.

Dans les positions II et IV, les moteurs 24 sont à l'arrêt et le moteur 10 est activé. Dans les positions III et V, le moteur 10 est à l'arrêt et les moteurs 24 sont activés.

La position II correspond à la position dans laquelle l'interrupteur 50 est fermé, l'interrupteur 51 étant ouvert, et les chariots 11 sont déplacés dans un sens le long des moyens de guidage, la position IV correspondant au mouvement inverse.

La position III correspond à la position dans laquelle les moteurs 24 agissent sur les câbles 15 pour monter les poulies 14 des palans 10, la position V correspondant au mouvement inverse.

La figure 11 illustre enfin une variante de fixation de l'extrémité des câbles 15 opposée aux treuils 23 qui est dans ce cas fixée au bout du bras 4 correspondant.

## Revendications

1. Dispositif de chargement autonome de bord pour avion-cargo à porte latérale (2), comprenant des moyens de levage (10, 110) déplaçables entre l'extérieur et l'intérieur du fuselage (F) de l'avion, des moyens (3, 4, 5; 103, 104, 105) porteurs et de guidage de ces moyens de levage entre l'intérieur et l'extérieur du fuselage, comportant une première partie (3; 103) s'étendant transversalement à l'intérieur du fuselage au niveau de la porte latérale et fixée dans la partie supérieure de ce dernier, et une deuxième partie mobile (4, 5; 104, 105) entre une position déployée dans laquelle elle prolonge la première partie à l'extérieur du fuselage en s'étendant en saillie transversalement à ce dernier à travers la partie supérieure de l'ouverture (1; 101) découverte par la porte latérale et une position repliée dans laquelle cette deuxième partie est escamotée à l'intérieur du fuselage, des moyens d'appui (7; 107) de la deuxième partie des moyens porteurs et de guidage en position déployée, des moyens (23; 123) de manoeuvre des moyens de levage des moyens (11, 23; 111, 123) pour déplacer les moyens de levage le long des moyens porteurs et de guidage et des moyens (18, 19, 20; 148) de déploiement et de repliement de la deuxième partie des moyens porteurs et de guidage, caractérisé en ce que la deuxième partie des moyens porteurs et de guidage, comprend deux bras (4) articulés chacun à une de leurs extrémités à l'intérieur du fuselage au voisinage d'un angle supérieur correspondant de ladite ouverture latérale du fuselage, ces bras s'étendant parallèlement entre eux en position déployée, et en ce que les moyens d'appui comprennent deux contre-fiches (7, 107) s'étendant chacune entre un bras respectif et le plancher (P) à l'intérieur du fuselage, les contre-fiches étant articulées à chacune de leurs extrémités pour permettre le repliement et le déploiement des bras.

2. Dispositif suivant la revendication 1, caractérisé en ce que les bras (4) sont articulés autour d'un axe parallèle à l'axe du fuselage.

3. Dispositif suivant la revendication 2, caractérisé en ce que chaque bras comprend deux parties (4a, 4b) articulées entre elles pour venir dans le prolongement l'une de l'autre en position déployée du bras.

4. Dispositif suivant la revendication 3, caractérisé en ce que les parties des bras sont articulées autour d'un axe parallèle à l'axe du fuselage.

5. Dispositif suivant la revendication 1 et l'une quelconque des revendications 2 à 4, caractérisé en ce que l'extrémité inférieure de chaque contre-fiche est articulée sur un chariot (8) respectif monté coulissant dans un rail (9) correspondant fixé transversalement dans le plancher du fuselage.

6. Dispositif suivant la revendication 5, caractérisé en ce que les moyens de déploiement et de repliement de la deuxième partie des moyens porteurs et de guidage, comprennent des moyens d'entraînement (18, 19, 20) en translation des chariots supportant les contre-fiches dans les rails associés.

7. Dispositif suivant la revendication 6, caractérisé en ce que les moyens d'entranement comprennent un moteur (18) disposé dans le plancher entre les deux rails, adapté pour entraner deux enrouleurs (19) reliés chacun à un chariot correspondant par l'intermédiaire d'un câble (20).

8. Dispositif suivant la revendication 1, caractérisé en ce que les bras (104) sont articulés chacun autour d'un axe incliné par rapport à l'axe du fuselage.

9. Dispositif suivant la revendication 8, caractérisé en ce que les moyens de déploiement et de repliement de la deuxième partie des moyens porteurs et de guidage, comprennent deux vérins (148) disposés chacun dans le fuselage entre la paroi supérieure de ce dernier et un bras respectif.

10. Dispositif suivant l'une quelconque des revendications précédentes, caractérisé en ce qu'il est prévu au moins une entretoise (6; 106) entre les bras.

11. Dispositif suivant l'une quelconque des revendications précédentes, caractérisé en ce que la première partie des moyens porteurs et de guidage, comprend deux premiers rails (3; 103) fixés parallèlement entre eux sur la paroi supérieure du fuselage et en ce que la deuxième partie de ces moyens porteurs et de guidage, comprend deux deuxièmes rails (5; 105) fixés chacun sous un bras correspondant, la position relative des bras par rapport aux premiers rails étant telle qu'en position déployée de ceux-ci, les deuxièmes rails viennent dans le prolongement des premiers.

12. Dispositif suivant la revendication 11, caractérisé en ce qu'au moins un des premiers rails (3) est escamotable dans la direction de l'axe du fuselage.

13. Dispositif suivant l'une quelconque des revendications précédentes, caractérisé en ce que les moyens de levage comprennent sur chaque bras, deux palans (10; 110) portés chacun par un chariot (11; 111) respectif monté coulissant dans les rails (3, 5; 103, 105) des moyens de guidage.

14. Dispositif suivant la revendication 13, caractérisé en ce que les chariots portés par un même bras sont solidaires en déplacement l'un de l'autre.

15. Dispositif suivant la revendication 14, caractérisé en ce que les moyens de manoeuvre des moyens de levage comprennent, pour chaque bras, un treuil (123) correspondant comportant au moins un tambour (32, 33) auquel sont reliés les palans du bras par l'intermédiaire chacun d'un câble (15) respectif.

16. Dispositif suivant la revendication 15, caractérisé en ce qu'il est prévu des moyens de synchronisation (25, 26, 28) des deux treuils des moyens de manoeuvre.

17. Dispositif suivant la revendication 16, caractérisé en ce qu'il est prévu des moyens d'équilibrage (30) agissant sur les moyens de synchronisation pour modifier l'inclinaison d'une charge portée par les moyens de levage par rapport à l'axe du fuselage.

18. Dispositif suivant l'une quelconque des revendications 14 à 17, caractérisé en ce que les moyens de déplacement des moyens de levage, comprennent pour chaque bras un-treuil (23, 49) correspondant comportant un tambour (34; 48) auquel sont reliés par l'intermédiaire d'un câble (37), les chariots du bras.

19. Dispositif suivant la revendication 18 dépendant de l'une quelconque des revendications 15 à 17 caractérisé en ce que les moyens de déplacement associés à un même bras, sont commandés par le treuil correspondant des moyens de manoeuvre, des moyens d'accouplement débrayables (36) étant prévus pour isoler le tambour des moyens de déplacement.

20. Dispositif suivant la revendication 19, caractérisé en ce que chaque tambour des moyens de déplacement est associé à des moyens de freinage (39).

21. Dispositif suivant l'une quelconque des revendications 15 à 20, caractérisé en ce que les treuils des moyens de manoeuvre sont entraînés chacun par un moteur hydraulique (24) correspondant.

**Claims**

1. An autonomous on-board loading device for an airfreighter with a lateral door (2), comprising lifting means (10, 110) movable between the exterior and the interior of the fuselage (F) of the aircraft, means (3, 4, 5; 103, 104, 105) of carrying and guiding these lifting means between the interior and the exterior of the fuselage, comprising a first section (3; 103) extending transversely to the interior of the fuselage level with the lateral door and fixed in the upper portion of the latter, and a second section (4 , 5 ; 104, 104) which can move between a deployed position in which it extends the first section inside the fuselage, projecting transversely to the latter through the upper portion of the opening (1; 101) revealed by the lateral door, and a retracted position in which this second section is withdrawn inside the fuselage, means of support (7; 107) for the second section of the carrying and guiding means in the deployed position, means (23; 123) of manoeuvring the lifting means for the means (11, 23; 111, 123) for moving the lifting means along the carrying and guiding means, and means (18, 19, 20; 148) of deploying and retracting the second section of the carrying and guiding means, characterised in that the second section of the carrying and guiding means comprises two arms (4) each jointed at one of their ends inside the fuselage in the vicinity of a corresponding upper angle of the said lateral opening of the fuselage, these arms extending parallel to one another in the deployed position, and in that the support means comprise two struts (7, 107) each extending between a respective arm and the floor (P) inside the fuselage, the struts being jointed at each of their ends to enable retraction and deployment of the arms.

2. A device according to claim 1, characterised in that the arms (4) are jointed to pivot around an axis parallel to the axis of the fuselage.

3. A device according to claim 2, characterised in that each arm comprises two portions (4a, 4b) which are jointed together to become an extension of each other in the deployed position of the arm.

4. A device according to claim 3, characterised in that the portions of the arms are jointed to pivot around an axis parallel to the axis of the fuselage.

5. A device according to claim 1 and any one of claims 2 to 4, characterised in that the lower end of each strut is jointed on a respective carriage (8) mounted to slide on a corresponding rail (9) fixed transversely in the floor of the fuselage.

6. A device according to claim 5, characterised in that the means of deployment and retraction of the second section of the carrying and guiding means comprise translatory driving means (18, 19, 20) for the carriages supporting the struts in the associated rails.

7. A device according to claim 6, characterised in that the drive means comprise a motor (18) located in the floor between the two rails, adapted to drive two winding mechanisms (19) each connected to a corresponding carriage by means of a cable (20).

8. A device according to claim 1, characterised in that the arms (104) are each jointed to pivot around an axis inclined relative to the axis of the fuselage.

9. A device according to claims is, characterised in that the means of deployment and retraction of the second section of the carrying and guiding means comprise two jacks, each arranged in the fuselage between the upper partition of the latter and a respective arm.

10. A device according to any one of the foregoing claims, characterised in that at least one brace (6; 106) is provided between the arms.

11. A device according to any one of the foregoing claims, characterised in that the first section of the carrying and guiding means comprises two primary rails (3; 103) fixed parallel to one another on the upper partition of the fuselage, and in that the second section of the carrying and guiding means comprises two secondary rails (5; 105) each fixed under a corresponding arm, the relative position of the arms in relation to the primary rails being such that, when the latter are in the deployed position, the secondary rails become an extension of the primary.

12. A device according to claim 11, characterised in that at least one of the primary rails (3) is withdrawable in the direction of the axis of the fuselage.

13. A device according to any one of the foregoing claims, characterised in that the lifting means comprise, on each arm, two pulley tackles (10; 110) each carried by a respective carriage (11; 111) mounted to slide on the rails (3, 5; 103, 105) of the guiding means.

14. A device according to claim 13, characterised in that the carriages carried on the same arm are integrally movable one with the other.

15. A device according to claim 14, characterised in that the means of manoeuvring the lifting means comprise, for each arm, a corresponding winch (123) comprising at least one drum (32, 33) to which are connected the pulley tackles of the arm, each by means of a respective cable (15).

16. A device according to claim 15, characterised in that there are provided means of synchronisation (25, 26, 23) for the two winches of the manoeuvring means.

17. A device according to claim 16, characterised in that there are provided trimming means (30) acting on the synchronising means in order to modify the inclination, relative to the axis of the fuselage, of a load carried by the lifting means.

18. A device according to any one of claims 14 to 17, characterised in that the means of moving the lifting means comprise for each arm a corresponding winch (23, 49) comprising a drum (34;48) to which are connected the carriages of the arm, by means of a cable (37).

19. A device according to claim 18, depending on any one of claims 15 to 17, characterised in that the shifting means associated with the same arm are controlled by the corresponding winch of the manoeuvring means, disengageable means of coupling (36) being provided in order to isolate the drum from the shifting means.

20. A device according to claim 19, characterised in that each drum of the shifting means is associated with braking means (39).

21. A device according to any one of claims 15 to 20, characterised in that the winches of the manoeuvring means are each driven by a corresponding hydraulic motor (24).

## Patentansprüche

1. Unabhängige Aufladevorrichtung für Transportflugzeuge mit einer seitlichen Tür (2), mit einer zwischen der Innenseite und der Außenseite des Flugzeugrumpfes (F) verfahrbaren Hubeinrichtung (10, 110), mit Trage- und Führungsmitteln (3, 4, 5; 103, 104, 105) dieser Hubeinrichtung zwischen der Innenseite und der Außenseite des Flugzeugrumpfs, die ein erstes, sich quer zum Inneren des Flugzeugrumpfes in der Höhe der seitlichen Tür erstreckendes und in deren oberen Bereich befestigtes Teil (3; 103) aufweist, sowie ein zweites Teil (4, 5; 104, 105), das zwischen einer ausgefahrenen Stellung, in der es das erste Teil zur Außenseite des Flugzeugrumpfes hin verlängert, indem es sich ausladend quer über letzteres hinaus quer zu dem oberen Bereich der von der seitlichen Tür freigegebenen Öffnung (1; 101) erstreckt, und einer eingefahrenen Stellung, in welcher das zweite Teil in das Innere des Flugzeugrumpfs eingezogen ist, ferner mit Auflagemitteln (7; 107) des zweiten Teils der Trageund Führungsmittel in ausgefahrener Stellung, mit Betätigungsmitteln (23; 123) der Hubeinrichtung der Mittel (11, 23; 111, 123) zur Verstellung der Hubeinrichtung entlang der Trage- und Führungsmittel und mit Mitteln (18, 19, 20; 148) zum Ausfahren und Einfahren des zweiten Teils der Trage- und Führungsmittel, dadurch gekennzeichnet, daß der zweite Teil der Trage- und Führungsmittel zwei Arme (4) aufweist, die jeweils mit einem ihrer Enden im Inneren des Flugzeugrumpfes in der Nähe einer oberen Ecke der seitlichen Öffnung des Flugzeugrumpfes zugeordnet angelenkt sind, wobei die Arme in der ausgefahrenen Stellung sich parallel zueinander erstrecken und daß die Auflagemittel zwei Verstrebungen (7, 107) aufweisen, von denen sich jede zwischen jeweils einem Arm und dem Boden (P) ins Innere des Flugzeugrumpfes erstrecken, wobei die Verstrebungen an jeder ihrer beiden Enden gelenkig angeschlossen sind, um das Einfahren und das Ausfahren der Arme zu ermöglichen.

2. Vorrichtung nach Anspruch 1, dadurch gekennzeichnet, daß die Arme (4) um eine zur Achse des Flugzeugrumpfes parallele Achse gelenkig gelagert sind.

3. Vorrichtung nach Anspruch 2, dadurch gekennzeichnet, daß jeder Arm zwei untereinander gelenkige Teile (4a, 4b) umfaßt, die in der ausgefahrenen Stellung des Arms in eine zueinander gestreckte Lage gelangen.

4. Vorrichtung nach Anspruch 3, dadurch gekennzeichnet, daß die Teile der Arme um eine zur Achse des Flugzeugrumpfes parallele Achse gelenkig verbunden sind.

5. Vorrichtung nach Anspruch 1 und einem der Ansprüche 2 bis 4, dadurch gekennzeichnet, daß das tieferliegende Ende jeder der Verstrebungen jeweils gelenkig an einem Fahrgestell (8) angeschlossen ist, das verschiebbar längs einer zugeordneten Schiene (9) geführt ist, die quer im Boden des Flugzeugrumpfs fest angebracht ist.

6. Vorrichtung nach Anspruch 5, dadurch gekennzeichnet, daß die Mittel zum Ausfahren und Einfahren des zweiten Teils der Trage- und Führungsmittel Antriebsmittel (18, 19, 20) für eine Translationsbewegung der Fahrgestelle aufweisen, die die Verstrebungen in den zugehörigen Schienen tragen.

7. Vorrichtung nach Anspruch 6, dadurch gekennzeichnet, daß die Antriebsmittel einen Motor (18) aufweisen, der im Boden zwischen den beiden Schienen angeordnet und zum Antrieb von zwei Wicklern (19) eingerichtet ist, deren jeder mit einem zugehörigen Fahrgestell über ein Seil (20) verbunden ist.

8. Vorrichtung nach Anspruch 1, dadurch gekennzeichnet, daß jeder der Arme (104) um eine zur Achse des Flugzeugrumpfes schräg verlaufende Achse gelenkig gelagert sind.

9. Vorrichtung nach Anspruch 8, dadurch gekennzeichnet, daß die Mittel zum Ausfahren und Einfahren des zweiten Teils der Trage- und Führungsmittel zwei Stellglieder (148) aufweisen, die jeweils in dem Flugzeugrumpf zwischen dessen oberer Wandung und einem entsprechenden Arm angeordnet ist.

10. Vorrichtung nach einem der vorangegangenen Ansprüche, dadurch gekennzeichnet, daß wenigstens ein Distanzstück (6; 106) zwischen den Armen vorgesehen ist.

11. Vorrichtung nach einem der vorangegangenen Ansprüche, dadurch gekennzeichnet, daß das erste Teil der Trageund Führungsmittel zwei erste Schienen (3; 103) aufweist, die parallel zueinander an der oberen Wandung des Flugzeugrumpfes befestigt sind, und daß das zweite Teil der Trage- und Führungsmittel zwei zweite Schienen (5; 105) aufweist, die jeweils unter einem zugehörigen Arm angeordnet sind, wobei die relative Lage der Arme bezüglich der ersten Schienen so gewählt ist, daß in deren ausgefahrener Stellung die zweiten Schienen in die Verlängerung der ersten Schienen gelangen.

12. Vorrichtung nach Anspruch 11, dadurch gekennzeichnet, daß wenigstens eine der ersten Schienen (3) in Richtung der Achse des Flugzeugrumpfes einklappbar ist.

13. Vorrichtung nach einem der vorangegangenen Ansprüche, dadurch gekennzeichnet, daß die Hubeinrichtung an jedem Arm zwei Flaschenzüge (10; 110) aufweist, die jeweils von einem Fahrgestell (11; 111) getragen ist, das verschiebbar auf den Schienen (3, 5; 103, 105) der Führungsmittel gelagert ist.

14. Vorrichtung nach Anspruch 13, dadurch gekennzeichnet, daß die von einem gleichen Arm getragenen Fahrgestelle bezüglich ihrer Verschiebung gegenseitig fest sind.

15. Vorrichtung nach Anspruch 14, dadurch gekennzeichnet, daß die Betätigungsmittel der Hubeinrichtung für jeden Arm eine entsprechende Winde (123) aufweisen, die wenigstens eine Trommel (32, 33) enthält, an der die Flaschenzüge der Arme jeweils über ein entsprechendes Seil (15) angeschlossen sind.

16. Vorrichtung nach Anspruch 15, dadurch gekennzeichnet, daß Synchronisationseinrichtungen (25, 26, 28) für die zwei Winden der Betätigungsmittel vorgesehen sind.

17. Vorrichtung nach Anspruch 16, dadurch gekennzeichnet, daß Mittel zur Gleichgewichtseinstellung (30) vorgesehen sind, die auf die Synchronisationseinrichtungen wirken, um die Neigung einer von der Hubeinrichtung getragenen Ladung bezüglich der Achse des Flugzeugrumpfes zu ändern.

18. Vorrichtung nach einem der Ansprüche 14 bis 17, dadurch gekennzeichnet, daß die Mittel zur Verstellung der Hubeinrichtung für jeden Arm eine zugehörige Winde (23, 49) umfassen, die eine Trommel (34; 48) aufweisen, an die über ein Seil (37) die Fahrgestelle des Arms angeschlossen sind.

19. Vorrichtung nach Anspruch 18 und abhängig von einem der Ansprüche 15 bis 17, dadurch gekennzeichnet, daß die mit demselben Arm in Verbindung stehenden Verstellmittel von der Winde der entsprechenden Betätigungsmittel gesteuert werden, wobei auskuppelbare Ankoppelmittel (36) zum Abtrennen der Trommel von den Verstellmitteln vorgesehen sind.

20. Vorrichtung nach Anspruch 19, dadurch gekennzeichnet, daß jede Trommel der Verstellmittel mit Bremsmitteln (39) in Verbindung steht.

21. Vorrichtung nach einem der Ansprüche 15 bis 20, dadurch gekennzeichnet, daß die Winden der Betätigungsmittel jeweils von einem entsprechenden hydraulischen Motor (24) angetrieben sind.

# FIG. 1

# FIG. 2

FIG. 3

FIG. 4

FIG. 5

# FIG. 6

# FIG. 7

FIG.8

FIG.9

FIG.10

FIG.11

EP 0 294 278 B1